# EUROPEAN PATENT SPECIFICATION

(11) **EP 2 693 926 B1**
(45) Date of publication and mention of the grant of the patent: **21.01.2015**
(21) Application number: 12718330.9
(22) Date of filing: 27.03.2012
(51) Int. Cl.: A47J 36/28, A47G 19/22, F28D 20/00

(54) **TECHNICAL PLATE**
TECHNISCHE PLATTE
PLATEAU TECHNIQUE

(30) Priority: 01.04.2011 IT TV20110046
(43) Date of publication of application: 12.02.2014
(73) Proprietor: Idea Prototipi SRL, 33031 Basiliano (UD) (IT)
(72) Inventor: AGOSTINI, Massimo, I-33030 Coseano (IT)
(74) Representative: Osti, Biancamaria
(86) International application number: PCT/IB2012/000614
(87) International publication number: WO 2012/131471

(56) References cited:
- WO-A1-03/079869
- DE-A1- 19 617 334
- GB-A- 2 336 899
- US-A1- 2008 251 063

## Description

The present invention relates to a technical plate for administration and display of food, made of composite material, apt to the refrigeration or heating also localized of at least one type of food such as sliced meats, meat, fish, vegetables, cakes, ice creams and various desserts by means of a PCM gel.

### Application's field

Nowadays the crowding of restaurants and bars frequented by people of different ethnicities and ages, has become the main problem for the managers, who are having to deliver food and drinks with a certain speed of service in combination with a quality as much as good.

In particular, the area most afflicted of these establishments is that of appetizers or a meal or snack before dinner, such as appetizers are always the first request of a consumer who presents to a restaurant or a bar. There are not excluded obviously other food services, such as for example catering and cd. slow food outdoors.

Currently there is a consistent recourse to solutions in the field, sometimes original, but not exhaustive and economic, this because yet do not set themselves the objective of recurring to the principles of self-preservation of and self-warning of the temperature of food or appetizer supported by plates or trays or other media of species already distributed to the various consumers at these establishments.

Known is in fact the loss of quality, such as sliced meats or cheese lying for a long time on the plates ordered and received by individual consumers, whereas instead the monitoring of these organoleptic quality remains a manual and visual operation dependent of service personnel or by expressed demand from consumers once it's found them not to correspond to the characteristics.

There can therefore be common complaints from consumers who often find themselves with foods that lose their typical quality even after just a brief exposure on a traditional service plate, especially during seasons or periods unusually hot or exceptionally hot, and thus not refrigerated properly, circumstances that more so require a continual movement of staff, if just only to satisfy the necessity for a reasonable control.

A use of a plate discreetly known for foods intended to solve some of the problems highlighted above, is that of the plates with a thermal base of the traditional type. Conventionally, these plates contain ice which melting can contaminate the food itself increasing bacterial growth, or plates with heat sealed bottom of the Eutectic type.

What then, we can reasonably say is that certainly it is known today, the overcrowding of public establishments such as restaurants and bars, which directly reflects on the management of speed, quality and quantity of cooling or heating food, such as those from a starter or snacks served to consumers. It follows an objective need to alleviate the burden of monitoring the operation of such foods, in relation to the service personnel, via an automation rapid, intelligently autonomous and of quality relative to the management concerned. It can also be agreed finally with the main disadvantage of the plates with a thermal bottom of the traditional type, that containing ice, melting can contaminate the food itself, or the one of the plates with a thermal bottom sealed of the eutectic type, the latter of which do not give any information on the temperature of food and, are rarely used and dispensed, if not occasionally in the hospitality industry of high prestige.

### State of the art

In the field of the devices, for the maintenance of cooling and heating of foods such as, sliced meats, meat, fish, vegetables, sweets, ice cream and various desserts, a search was conducted, which, although not extensive, has made it possible to identify at least the following prior art documents:
D1 DE19617334 A1 KLEIN ALEXANDER
D2 US2008251063 (A1) PALENA TRAVIS
D3 WO03079869 (A1) CHAMPKINS MARK ROSS D4 GB2336899 A
BARWICK ANDREW DONALD
D5 US2001004863 (A1) SIMERAY JANICK
D6 KR20090002784 (U) N.N.
D7 CN201341729 (Y) JIANWEI YANG
D8 CN2701351 (Y) LI ZHENGJIE

D1 represents a device that consists of heating surfaces which are brought into contact with the outer surfaces of the plates or dishes. The heat source is a thermal pack (1) which consists of a flexible, sealed plastic container, esp. a bag or sack, and a filling consisting of a reversible heat storing substance. The substance esp. CH3COONa can be excited by bending or kneading and releases crystallization heat. The substance can be returned to its normal state by heating/boiling.

D2 represents a rechargeable, self-heating foodcontainer includes an inner chamber with a supersaturated salt solution and trigger means for initiating crystallization of the supersaturated salt solution. A rechargeable element for heating food includes a cylinder containing a supersaturated salt solution sealingly insertable into a food container, with a trigger in fluid contact with the supersaturated salt solution. A method of heating a food container includes providing a food container with an internal chamber, a supersaturated salt solution contained in the internal chamber, and a trigger to initiate crystal nucleation within the supersaturated salt solution in an exothermic reaction; and recharging by heating the food container until the salt crystals melt, and cooling the salt solution to a supersaturated state.; A portable recharger for a rechargeable heating element includes an insulated sleeve with electric resistive heating element pluggable into an automobile or conventional ac outlet.

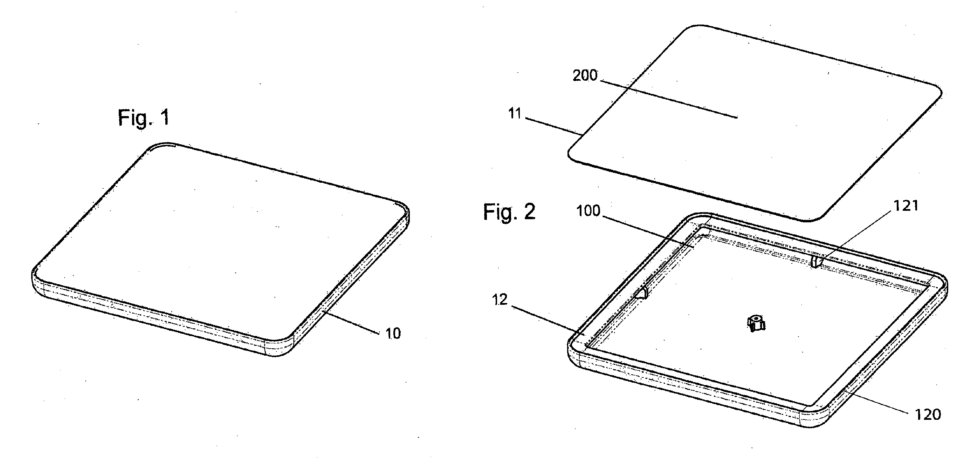

D3 represents an article oftableware that comprises a surface (1) for holding food or drink, a layer of phase-change material (7) that is capable of being in a super-cooled state at room temperature (25 DEG C) and that is in thermal contact with the surface (1); in Figure 1, the phase change layer (7) is secured in recess (6). An initiator is provided for initiating the solidification of the phase change material, when in a super-cooled state, so that the heat given out heats the tableware. The thickness of the layer of phase-change material (7) does not exceed 6mm so that the phase-change material (7) can be regenerated using a standard 65 DEG C dishwasher cycle.

D4 represents a holding device (10; 20; 30; or 100) that comprises an integrated phase-change thermal storage materials (16; 26; 36; or 116, 126) for keeping food, drink or other stuff or items warm for a prolonged period by release of stored latent heat to the contents held by the device. The thermal storage material can be incorporated into a pre-formed cavity (14; 24) in the body structure or a cavity (36; 116, 126) formed between different body parts. A conductive arrangement can be incorporated to allow the device to be charged with heat by microwave heating. By selecting a heat storage material of a given fusion temperature the device of the present invention can be easily adapted to release heat at a particular temperature range suitable to a particular application. Suitable devices for this invention include tableware, kitchenware, house-ware, laboratory equipment, hospital appliances or other devices for domestic, personal or commercial uses.

D5 represents a plate able to perform a function of self-preservation of heat and cooling, consisting of an upper body and of a lower body of the plate, while the edge of the flat body top and bottom are connected to enclose an internal cavity sealed, and the internal cavity is provided with liquid. When the plate with this structure is used for hot or cold foods, the food on the plate can be kept warm delaying cooling slowly releasing the heat or when the plate with this structure is used for cold foods delaying heating, so, when the plate is used for the hot food, the food does not need to be heated, for the merit of the function of heat storage, while when the plate is used for the cold food, the freshness of the food can be kept cold for merit of the function of conservation of cooling.

D6 Represents a plate provided with the function of thermal insulation for cold and hot. The tray consists of an electro-thermal film connected with a power cord, and a plate support, in which, the plate adopts a double-layer hollow structure; one end of the filling pipe is formed on one side of the plate; the electro-thermal film is fixed on the support of the plate, the plug is incorporated in a side of the support plate; and the plate is arranged on the support of the plate. Compared to a battery of a kitchen with conventional heating by means of electrothermal film, this utility model has the benefit of the addition of the cooling function, dual purpose of cooling and heating, simple structure, low cost, ease of use and strong practicality.

07 Represents a plate cooler. The invention is devoid of the abstract but it is clear from the drawing that is similar to the finding described by D6 in the previous paragraph.

08 Represents a device for heating and cooling of food including a tray with at least one main plate in the tray, at least one secondary plate in the tray, a cover associated with the tray to keep the food hot or cold, an inductor for heating; the heating or the maintenance of the heat is supplied by an electronic generator circuit that induces currents in the armature located above or below the plates, a thermoelectric heat exchanger for maintaining the food fresh or cold by extracting the residual heat from the plates and compensates the thermal insulation losses from the tray and cover, and the rechargeable batteries connected to the inductor and the thermoelectric heat exchanger.

Ultimately it is reasonable to consider known:
a) a plate containing a thermal pack which consists of a flexible, sealed plastic container, esp. a bag or sack, and a filling consisting of a reversible heat storing substance. The substance esp. CH3COONa can be excited by bending or kneading and releases crystallization heat. The substance can be returned to its normal state by heating/boiling.
b) a method of heating a food container includes providing a food container with an internal chamber, a supersaturated salt solution contained in the internal chamber, and a trigger to initiate crystal nucleation within the supersaturated salt solution in an exothermic reaction; and recharging by heating the food container until the salt crystals melt, and cooling the salt solution to a supersaturated state.
c) an article of tableware that comprises a surface for holding food or drink, a layer of phase-change material that is capable of being in a super-cooled state at room temperature (25 DEG C) and that is in thermal contact with the surface; the phase change layer is secured in recess. An initiator is provided for initiating the solidification of the phase change material, when in a super-cooled state, so that the heat given out heats the tableware.
d) a holding device that comprises an integrated phase-change thermal storage materials for keeping food, drink or other stuff or items warm for a prolonged period by release of stored latent heat to the contents held by the device. The thermal storage material can be incorporated into a pre-formed cavity in the body structure or a cavity formed between different body parts.
e) a plate able of self-preservation of heating and cooling, consisting of an upper body and of a lower body of the plate; the edge of the top and bottom plate body are connected to enclose an internal sealed cavity, and the internal cavity is provided with liquid;
f) a plate provided with the function of thermal insulation for cold and hot. The plate consists of an electrothermal film connected with a power cord, and a plate support, in which the plate adopts a double-layer hollow structure;
g) a device for heating and cooling of food including a tray with at least one main plate in the tray, at least one secondary plate in the tray, a cover associated with the tray to keep the food hot or cold, an inductor for heating; the heating or the maintenance of the heat is supplied by an electronic generator circuit that induces currents in the armature located above or below the plates, a thermoelectric heat exchanger for maintaining the food fresh or cold by extracting the residual heat from the plates and compensates the thermal insulation losses from the tray and cover, and the rechargeable batteries connected to the inductor and the thermoelectric heat exchanger;

### Drawbacks

Having said all that, and from all of public domain, thus it should be noted that the technical means or plates commonly used in the hospitality industry are still using traditional materials such as ice or its substitutes such as gel or liquid cooling or traditional heating content in sealed rooms commonly called eutectic. These sealed eutectic chambers contain cooling or heating liquids which have the defect of allowing a mediocre retention of the initial temperature charge of cooling or heating, which progressively tends then to vary gradually but continuously, with a curve approximately linear up to the reaching of room temperature.

While making consistent use of similar solutions in the field, they are to be considered not exhaustive and economic, and this is because, in principle, still do not place themselves nor the objective of using technical plates having more effective refrigerating or heating means, nor to principles of automation and self-monitoring of the temperature of the food ordered and received by consumers at such catering establishments.

As regards instead a specifically designed combined plate containing a technical gel of last generation, or PCM, also equipped with self-monitoring of food distributed to the consumer, there are no finds of similar embodiments or that do suggest their employment in the patent ambit and generally in the state of the art. In principles we can agree that what found as state of the art regards the employment of traditional technical plates, employing natural ice or conventional eutectic liquids and gels.

From all the above, there is a need for companies, particularly of the sector, to identify alternative solutions, most effective, compared to the solutions up to now in place. One purpose of the present invention is also to obviate the drawbacks described.

### Brief description of the invention

This and other purposes are achieved with the present invention according to the characteristics of the included claims solving the mentioned problems through the development of a technical plate which has the function of cooling or heating, even localized, of at least one food such as sliced meats, meat, fish, vegetables, sweets, ice cream, and various desserts, by the use of a PCM gel, injected at the bottom or the containment chamber of the same technical plate, said chamber designed to contain said PCM material. The technical plate object of the present invention is essentially composed of two parts, respectively an upper and a lower, the upper part forming a support plane whose surface is apt to support, chilling or heating the food, and the lower part in the manner of the box-shaped body, complementarily which has at least a containment chamber of the PCM material. The said supporting surface is preferably induction welded, forming integral part with the said lower part or box-shaped body with the containment chamber of the PCM material, after the said PCM material has been injected to fill the said containment chamber. The upper part of the technical plate comprises means for displaying information related to the thermal conditions of the food surface supported on it, thus displaying the temperature of the technical plate in real-time.

### Purposes

In this way, through the considerable creative contribution whose effect has allowed to reach a considerable technical progress, are achieved some aims and benefits.

The first aim of the present invention was to enable the realization of a technical plate particularly suitable for the refrigeration or heating of at least one food such as sliced meats, meat, fish, vegetables, sweets, ice cream, various desserts, etc.. through the use of a PCM gel or Phase Change Material, injected into said lower portion which includes the containment chamber of the same technical plate, specially made to contain such material PCM. This PCM gel has the characteristic of having a specific memory of temperature, which is considered, similarly to what happens for an electric battery, in a very constant way up to the reaching of the threshold of discharge of such material. Thus, it can be stated that the temperature of the food supported on the technical plate object of this invention, will remain almost constant for the whole duration of the same, and in any case reasonably, for the duration of the individual consumption.

A second aim was therefore the realization of a technical plate as in object with an upper part which surface is apt to support, chilling or heating the food.

A third aim consisted in assembling the said upper part by welding it preferably by induction, thus forming an integral part with the said lower part comprising the containment chamber of the PCM material, after the said PCM material has been injected to fill said chamber.

A fourth aim consisted in the realization of the upper part of the technical plate, which comprises means for displaying information related to the thermal surface conditions of the food supported on it, thus giving a visual indication constant and in real time, immediately perceptible of the temperature of the technical plate and thus of the food supported on it.

These and other advantages will appear from the following detailed description of preferred embodiments with the help of the attached schematic drawings, whose details of execution are not to be considered limitative but only illustrative.

### Drawing content

Figure 1 is a three-dimensional assembly view of the technical plate.
Figure 2 is a three-dimensional exploded view of the technical plate of which in Figure 1.

### Example of realization of the invention

The object of the present invention (Fig. 1) is a technical plate (10) which has the function of cooling or heating of at least one food such as sliced meats, meat, fish, vegetables, sweets, ice cream, various desserts, etc.. by means of a PCM gel (100), injected into the lower part (12) which includes the containment chamber of the technical plate (10) itself, specifically designed to contain such gel PCM material (100).

More particularly, the technical plate (10) which is apt to refrigerate or to heat, or maintain the temperature, of at least one food such as sliced meats, meat, fish, vegetables, sweets, ice creams, various desserts, etc.. by means of a PCM gel (100), has the characteristic of having a specific memory of temperature, which is considered, similarly to what happens for an electric battery, in a constant manner up to the achievement of the discharge threshold of such material, allowing the temperature of the food supported on the technical plate (10) object of this invention, to remain almost constant for the duration of the individual consummation.

Again, the technical plate (10) apt for chilling or heating at least one food such as sliced meats, meat, fish, vegetables, sweets, ice creams, various desserts, etc.. by means of a PCM gel (100), has an upper part (11) which surface is apt to support, chilling or heating the food.

The technical plate (10) apt for the refrigeration or heating of at least one food such as sliced meats, meat, fish, vegetables, sweets, ice creams, various desserts, etc.. by means of a PCM gel (100), has the said upper part (11) which is induction welded, thus forming a part united with its lower part (12) which includes the containment chamber of the gel PCM material (100), after the said material has been injected to fill that chamber. In a possible preferential solution, the lower part (12) is formed in such a way as to be arranged around the perimeter of a protruding frame (120) at the base of which along the internal perimeter originate teeth (121). Said teeth (121) constitute support points of the upper part (11) so that the same is substantially coplanar with respect to said protrusion frame (120) and contained within the perimeter of the same.

The development of the technical plate (10) apt for chilling or heating of at least one food such as sliced meats, meat, fish, vegetables, sweets, ice creams, various desserts, etc.. by means of a PCM gel (100), incorporates in the realization of the upper part (11) of the technical plate (10), of display means (200) of the information related to the surface thermal conditions of the food supported on it, thus giving a visual indication of the temperature of the technical plate (10), and thus of the food supported on it, in real time.

Finally, the said technical plate (10) apt for chilling or heating of at least one food such as sliced meats, meat, fish, vegetables, sweets, ice cream and various desserts, using a PCM gel (100), it can be made of any geometric shape. The parallelepiped shape represented by the drawings is purely exemplary but not exhaustive.

### References

(10) Technical plate
(11) Upper part of the technical plate
(12) Lower part of the technical plate
(100) PCM gel
(120) protruding frame
(121) teeth
(200) display means

## Claims

1. Technical plate (10) with the function of cooling or heating of at least one food, that has injected into the containment chamber of the lower part (12) a Phase Change Material gel (100) and has the upper part (11), whose surface is apt to support, while maintaining in temperature the food, **characterized in that** said upper part (11) is welded by induction, thus forming a part integral with the said lower part (12) which includes the containment chamber of the gel PCM material (100).

2. Technical plate (10) with the function of cooling or heating of at least one food according to claim 1 **characterized in that** the lower part (12) is formed in such a way as to be arranged around the perimeter of a protruding frame (120) along the base of which the inner perimeter originate teeth (121) of support of the upper part (11) so that the same is substantially coplanar with respect to said protrusion frame (120) and contained within the perimeter of the same and the upper part (11), in a manner that integrates a display means (200) of the information related to the surface thermal conditions of the food supported on it, so as to provide a visual indication of the temperature of the technical plate (10), and thus of the food supported on it, in real time.

## Patentansprüche

1. Technische Platte (10) mit der Funktion des Kühlens oder Erwärmens von mindestens einem Lebensmittel, in dessen Behälterkammer im Unterteil (12) ein PCM-Gel (100) eingespritzt wird, und dessen Oberteil (11) die Lebensmittel trägt, unter Aufrechterhaltung ihrer Temperatur, **gekennzeichnet dadurch, dass** das Oberteil (11) Induktionsgeschweißt ist, also einstückig mit dem besagten Unterteil (12) ist, das die Behälterkammer des PCM-Gels (100) enthält.

2. Technische Platte (10) mit der Funktion des Kühlens oder Erwärmens von mindestens einem Lebensmittel nach Anspruch 1, **gekennzeichnet dadurch, dass** das Unterteil (12) um den Umfang eines vorspringenden Rahmens herum (120) angeordnet ist, wobei entlang der Basis des inneren Umfangs Zähne (121) zur Unterstützung des Oberteils (11) vorhanden sind, so dass letzteres im wesentlichen koplanar in Bezug auf besagten vorspringenden Rahmen (120) und innerhalb des Umfangs desselben und des Oberteils (11) enthalten ist, auf eine Art, die ein Anzeigemittel (200) für Informationen über die Oberflachenwärme der darauf liegenden Lebensmittel integriert, als Anzeige der Temperatur der technischen Platte (10) und damit der darauf liegenden Lebensmittel, in Echtzeit.

## Revendications

1. Plateau technique (10) dont la fonction est de refroidir ou de chauffer au moins un aliment, où un gel de matériau à changement de phase (100) a été injecté dans la chambre de confinement de la partie inférieure (12) et dont la surface de la partie supérieure (11) est destinée à supporter les aliments tout en maintenant leur température, **caractérisé en ce que** ladite partie supérieure (11) est soudée par induction, faisant ainsi partie intégrante de ladite partie inférieure (12) qui comprend la chambre de confinement du gel MCP (100).

2. Plateau technique (10) dont la fonction est de refroidir ou de chauffer au moins un aliment selon la revendication 1, **caractérisé en ce que** la partie inférieure (12) est disposée autour du périmètre d'une structure faisant saillie (120) le long de la base du périmètre intérieur formant des dents (121) de support de la partie supérieure (11), de telle sorte que cette dernière est essentiellement coplanaire par rapport à ladite structure en saillie (120) et est comprise dans le périmètre de cette dernière et de la partie supérieure (11), de manière à intégrer un moyen d'affichage (200) de l'information concernant les conditions thermiques superficielles des aliments supportés dessus, de sorte à fournir en temps réel une indication visuelle de la température du plateau technique (10), et par conséquent des aliments supportés sur ce dernier.
